Europäisches Patentamt

European Patent Office

Office européen des brevets

(19)

(11) Publication number : **0 129 417 B2**

(12) NEW EUROPEAN PATENT SPECIFICATION

(45) Date of publication of the new patent specification : **12.08.92 Bulletin 92/33**

(51) Int. Cl.⁵ : **B60K 41/02, B60K 41/08**

(21) Application number : **84304033.8**

(22) Date of filing : **15.06.84**

(54) **Automatic clutch control system.**

(30) Priority : **16.06.83 JP 108247/83**
**16.06.83 JP 108248/83**
**30.06.83 JP 119165/83**

(43) Date of publication of application :
**27.12.84 Bulletin 84/52**

(45) Publication of the grant of the patent :
**10.01.90 Bulletin 90/02**

(45) Mention of the opposition decision :
**12.08.92 Bulletin 92/33**

(84) Designated Contracting States :
**CH DE FR GB IT LI SE**

(56) References cited :
**EP-A- 38 113**
**EP-A- 0 057 322**
**EP-A- 0 092 950**
**DE-A- 2 811 953**
**GB-A- 2 012 892**
**GB-A- 2 066 919**
**GB-A- 2 080 910**
**JP-A-57 160 730**
**US-A- 4 023 660**
**US-A- 4 475 637**

(73) Proprietor : **FUJITSU LIMITED**
**1015, Kamikodanaka Nakahara-ku**
**Kawasaki-shi Kanagawa 211 (JP)**
Proprietor : **Isuzu Motors Limited**
**6-22-10 Minamiooi Shinagawa-ku**
**Tokyo 140 (JP)**

(72) Inventor : **Asagi, Yasuyoshi**
**3-510, Kizuki Nakahara-ku**
**Kawasaki-shi Kanagawa 211 (JP)**
Inventor : **Ogawa, Noriaki**
**3-12-21, Tagara Nerima-ku**
**Tokyo 176 (JP)**
Inventor : **Kasai, Hitoshi**
**878, Shimonoge Takatsu-ku**
**Kawasaki-shi Kanagawa 213 (JP)**
Inventor : **Hattori, Toshihiro**
**Mezon Hirota B-504 927 Kamitsuchidana**
**Ayase-shi Kanagawa 252 (JP)**
Inventor : **Ishihara, Masaki**
**831-14, Shobusawa**
**Fujisawa-shi Kanagawa 252 (JP)**
Inventor : **Uriuhara, Makoto**
**C-505, 2-33-58, Hirado Totsuka-ku**
**Yokohama-shi Kanagawa 244 (JP)**

(74) Representative : **Sunderland, James Harry et al**
**HASELTINE LAKE & CO Hazlitt House 28**
**Southampton Buildings Chancery Lane**
**London WC2A 1AT (GB)**

EP 0 129 417 B2

## Description

The present invention relates to a clutch control system, more particularly to a method and apparatus for an automatic clutch control system using a microcomputer.

The present invention is advantageously used, for example, for automobiles having conventional dry-type single-plate clutches and slidingmesh-type transmissions.

The automatic clutch control system according to the present invention can automatically control the clutch moving time, clutch moving speed, and gear changes under a predetermined control program stored in a microcomputer, thus allowing easy driving under all driving conditions.

As is well known, three main types of transmissions are now in use for clutch control and gear change in automobiles: manual transmissions, using dry-type single-plate clutches and sliding-mesh-type transmissions, which are manually operated by a clutch pedal and a gear change lever; semiautomatic transmissions, also using dry-type single-plate clutches and slidingmesh-type transmissions, which have a gear change mechanism manually operated by a change lever and a clutch automatically controlled by a computer; and automatic transmissions, for example, using torque converters and planetary-gear-type auxiliary transmissions, which are automatically controlled by a computer controller.

Manual transmissions are troublesome in respect of operability, poor smoothness of change, and susceptibility of efficiency to driving characteristics of individual drivers.

Semiautomatic transmissions are poor in smoothness of change. Finally, automatic transmissions are poor in gas mileage (fuel consumption), slow in response time, and high in cost.

GB-A-2 012 892 discloses as specified in the first part of claim 1 and 1 respectively a mechanical automatic transmission having an electronic control system which monitors throttle position, engine speed, transmission countershaft speed, and vehicle speed, and controls clutch engagement according to a logic program. An arrangement of parallel-connected solenoid valves is used to control a clutch actuator for engaging the clutch.

EP-A2-0 057 322 discloses clutch control means including an electronic logic control having a clutch position signal generator, which is responsive to vehicle operating parameters to produce a control signal for a clutch actuator. A clutch disengagement control is also provided and this can produce an output signal which overrides the control signal for rapid disengagement of the clutch. The output signal is fed through an amplifier to give it a fixed time characteristic for disengaging the clutch more or less rapidly.

According to one aspect of the present invention there is provided an apparatus for an automatic clutch control system, for use in a motor vehicle, comprising the features as defined in claim 1.

According to a second aspect of the present invention there is provided a method for automatic clutch control, for a motor vehicle, comprising the steps as defined in claim 7.

The present invention provides an automatic clutch control system enabling highly precise, automatic control of the clutch moving time and clutch moving speed under various driving conditions.

The present invention can also provide an automatic clutch control system enabling use of conventional dry-type single-plate clutches and sliding-mesh-type transmissions.

The present invention enables easy driving under all driving conditions and good operability and gas mileage compared with conventional manual, semiautomatic, and fully automatic transmissions. Moreover, it can be used with dry-type single-plate clutches and sliding-mesh-type transmissions used in conventional manual and semiautomatic transmissions.

Reference is made, by way of example, to the accompanying drawings in which:-

Fig. 1 is a schematic block diagram of an automatic clutch control system in a conventional semiautomatic transmission;

Fig. 2 is a schematic view of a clutch actuator shown in Fig. 1;

Fig. 3 is a timing chart of drive current applied to a solenoid valve (A), the quantity of oil flow through one solenoid valve (B), and the quantity of oil flow through another solenoid valve (C);

Fig. 4 is a schematic block diagram of an automatic clutch control system according to an embodiment of the present invention;

Fig. 5 is a schematic block diagram of a hydraulic control circuit including solenoid valves controlled by the controller shown in Fig. 4;

Fig. 6 is a schematic block diagram for explaining the automatic clutch control system shown in Fig. 4;

Fig. 7 to Fig. 9 are graphs for explaining relations between clutch stroke and clutch moving time (Fig. 7) and between clutch stroke and clutch moving speed (Fig. 8 and Fig. 9) whereby Figure 9 covers the detailed embodiment of the invention;

Fig. 10 shows timing charts for opening and closing of valves and the quantity of fluid flow therethrough;

Fig. 11 is a basic block diagram of the controller shown in Fig. 4; and

Fig. 12 is a flow chart of a clutch control procedure performed in the controller shown in Fig. 11.

In general, rotation of an automobile engine shaft is transmitted to a shaft of a transmission mechanism by a dry-type single-plate clutch. To control the clutch engagement, a hydraulic control actuator is used. The hydraulic control actuator is constituted by a hydraulic cylinder used to engage and disengage the clutch and a plurality of solenoid valves used to control the motion of the hydraulic cylinder. Control of the hydraulic actuator, i.e., control of the solenoid valves, is effected mechanically in manual transmissions and electronically in semiautomatic transmissions.

Before describing the present invention, an explanation will be given of a conventional clutch control system for a semiautomatic transmission using a dry-type single-plate clutch and hydraulic control actuator.

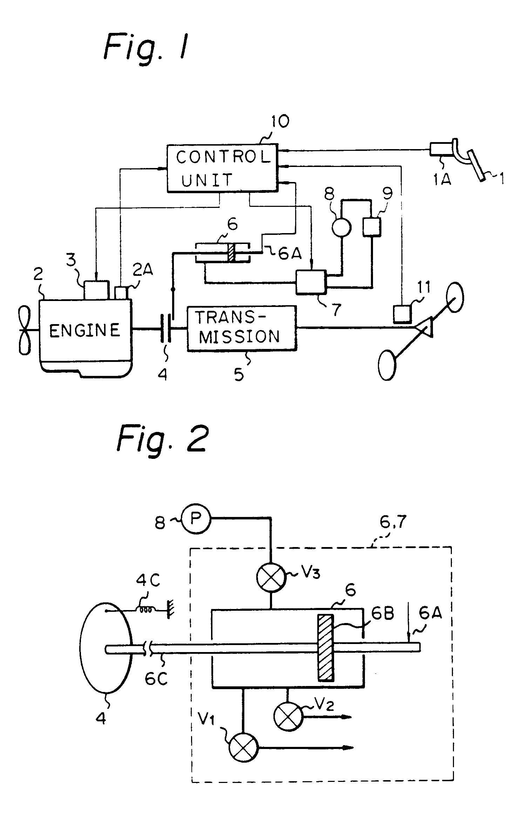

Referring to Fig. 1, reference numeral 1 is an accelerator pedal, 1A an accelerator pedal sensor, 2 an engine, 2A an engine speed sensor, 3 a throttle actuator, 4 a clutch, 5 a transmission, 6 a clutch actuator, 6A a clutch stroke sensor, 7 a solenoid valve group, 8 an oil pump, 9 an oil tank, 10 a control unit, and 11 an automobile speed sensor.

The control unit 10, constituted by a microcomputer, controls the throttle actuator 3 and the solenoid valve group 7 in accordance with a signal transmitted from the accelerator pedal sensor 1A, a signal transmitted from the engine speed sensor 2A, a signal transmitted from the clutch stroke sensor 6A, and a signal transmitted from the automobile speed sensor 11. The control unit 10 also feeds back the stroke signal transmitted from the clutch stroke sensor 6A to control the opening of the solenoid valve group 7 for engagement, slip, or disengagement of the clutch based on the clutch moving speed, as defined by clutch engagement, clutch slip, clutch disengagement, change in engine speed, (rotation speed of the engine shaft), automobile speed, and other driving conditions.

In other clutch control systems used for semiautomatic transmission, the system feeds back a stroke signal transmitted from a clutch stroke sensor, engine speed sensor, and automobile speed sensor to control the duty ratio (ratio of opened and closed time) of solenoid valves by a control unit so as to obtain both a clutch moving speed and clutch moving time defined by engine speed, automobile speed, and other driving conditions.

However, it is difficult to obtain the desired clutch moving speed and clutch moving time by controlling the opening or closing of the solenoid valves because it is necessary to finely control the duty ratio of the valves, which necessitates complex valve control.

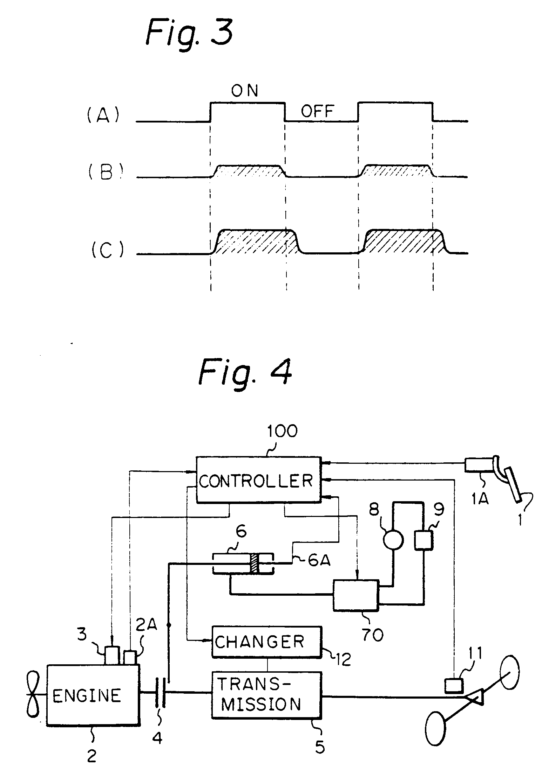

The above problems will be explained in detail hereinafter with respect to Fig. 2 and Fig. 3. Referring to Fig. 2, as mentioned above, the hydraulic control actuator is constituted by a clutch actuator, i.e., an oil cylinder 6, and a plurality of solenoid valves ($V_1$ to $V_3$). A piston 6B equipped with a piston rod 6C is provided in the oil cylinder 6. The solenoid valve $V_1$ is provided

for exhaust in a small diameter fluid passage, and the solenoid valve $V_2$ is provided for exhaust in a large diameter fluid passage. The solenoid valve $V_3$ is provided for supply.

Although only two exhaust solenoid valves $V_1$ and $V_2$ are shown in the drawing, generally a plurality of fluid passages having the same diameters are provided in the actuator and each fluid passage is controlled by a solenoid valve. In the case shown in the drawing, the solenoid valve $V_2$ is used for coarse control of the oil flow, and solenoid valve $V_1$ for fine control of the oil flow.

Referring to Fig. 3, when a drive current having a pulse waveform as shown in (A) is applied to the solenoid valves $V_1$ and $V_2$, the oil flow through the solenoid valve $V_1$ in the small diameter fluid passage is shown by (B), and the oil flow through the solenoid valve $V_2$ in the large diameter fluid passage is shown by (C).

The oil flows through the solenoid valves $V_1$ and $V_2$ are constant so long as the pulse waveform of the drive current remains the same, i.e., has the same pulse width. The oil flow, however, changes when the pulse width becomes smaller or with increasingly smaller diameters of fluid passages, in order to achieve finer control, whereby the control of the hydraulic actuator becomes unstable (imprecise). Accordingly, it is difficult to obtain precise control of opening or closing of solenoid valves so as to obtain the desired clutch moving speed and clutch moving time.

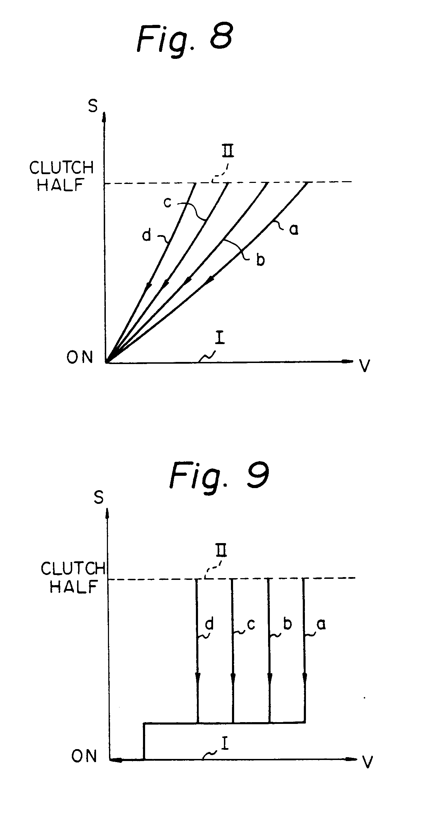

An embodiment of an automatic clutch control system according to the present invention will be explained later with reference to figure 9 in detail. As explained above, an automatic clutch control system according to the present invention can be used with conventional dry-type single-plate clutches and sliding-mesh-type transmissions. In embodiments of the present invention, the (gear) change lever used in semiautomatic transmissions is eliminated and a transmission changer (drive mechanism) added instead. These clutch and drive mechanisms are controlled by a microcomputer controller. Accordingly, a clutch control system according to the present invention is a fully automatic transmission using a conventional clutch and transmission.

Referring to Fig. 4, the automatic clutch control system is constituted by the same components as shown in Fig. 1, except for a controller 100, a solenoid valve group 70, and a (gear) changer 12. Components the same as in Fig. 1 are indicated by the same reference numerals.

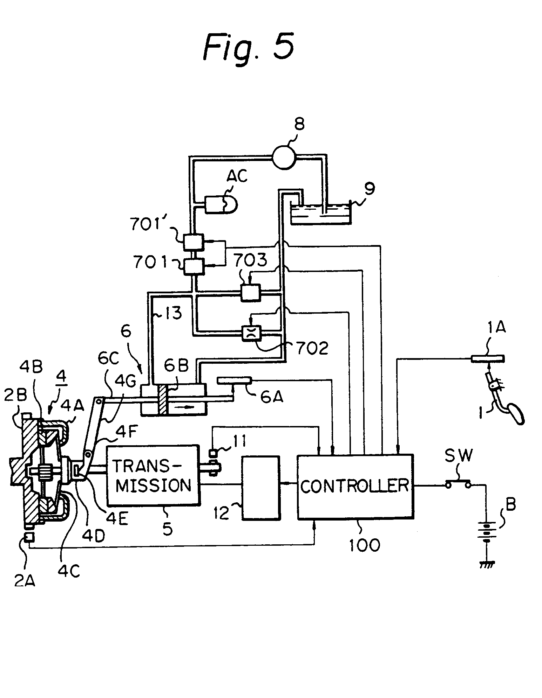

Referring to Fig. 5, the clutch 4 is constituted by a clutch pressure plate 4A, clutch disk 4B, diaphragm spring 4C, clutch release bearing 4D, clutch release lever 4E, clutch shaft 4F, and lever 4G. Reference numeral 2B is an engine flywheel; 701, 701', 702, and 703 solenoid valves in the solenoid group 70; B a battery; SW a power switch associated with an ignition switch; and AC an accumulator.

The clutch 4 is controlled by controlling the opening or closing of the solenoid valves 701, 701′, 702, and 703 using the controller 100. The controller 100 consists of a microcomputer which has a stored program relating to driving conditions. When the solenoid valves 701 and 701′, for example, are actuated by the controller 100, pressurized fluid is supplied to the oil cylinder 6 from the oil pump 8. The piston 6B of the oil cylinder 6 is thus moved toward the right as indicated by the arrow to disengage the clutch disk 4B. When the solenoid valves 702 and 703 are actuated by the controller 100, the pressurized fluid is exhausted from the oil cylinder 6. The piston 6B thus moves in the reverse direction due to the action of a return spring (not shown) to reengage the clutch disk 4B.

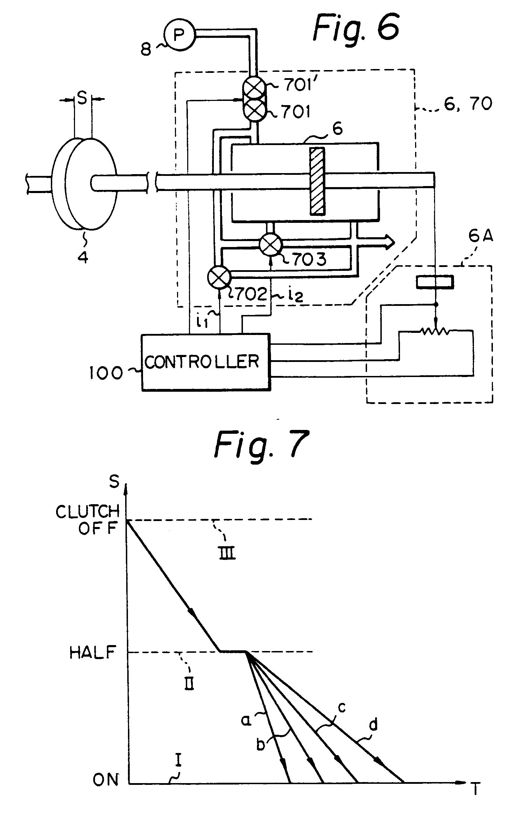

This control of clutch engagement and disengagement will be explained in more detail hereinafter with respect to Figs. 6, 7, 8, 9, and 10.

The controller 100 stores various parameters, for example, $a$ to $d$ shown in Figs. 7 to 9, defining relations between the clutch stroke and clutch moving time or between the clutch stroke and clutch moving speed under various driving conditions, such as upward or downward slopes, flat roads, and stopping. The controller 100 uses these parameters $a$ to $d$ and the signal transmitted from the clutch stroke sensor 6A, for example, a potentiometer, to calculate the desirable clutch moving speed and clutch moving time corresponding to the clutch stroke $S$ and controls the solenoid valve group 70 based on the results of its calculations.

The control modes will be explained in more detail with respect to Figs. 7 to 9. Referring to Fig. 7, the ordinate indicates the clutch stroke (S) and the abscissa indicates the clutch moving time (T). The lines I, II, and III indicate clutch engagement (clutch on), clutch slip (half clutch), and clutch disengagement (clutch off). In the example shown on the graph, the clutch moving time is controlled to (determined as) a predetermined gradually increasing value in clutch operation from line III to line II and controlled to one of a set of predetermined gradually increasing values corresponding to a selected one of the driving condition parameters $a$ to $d$ in clutch operation from line II to line I.

In Figs. 8 and 9, the ordinates indicate the clutch stroke (S) and the abscissae indicate the clutch moving speed (V). In the control modes of both Figs. 8 and 9, the clutch moving speed is controlled to a constant value in the clutch operation from line III to line II. In Fig. 8, clutch moving speed is controlled to one of a set of predetermined gradually decreasing values corresponding to a selected one of the driving condition parameters $a$ to $d$ in the clutch operation from line II to line I. In Fig. 9, the clutch moving speed is controlled to one of a set of predetermined constant values in clutch operation from line II to near line I and to a predetermined constant value to line I.

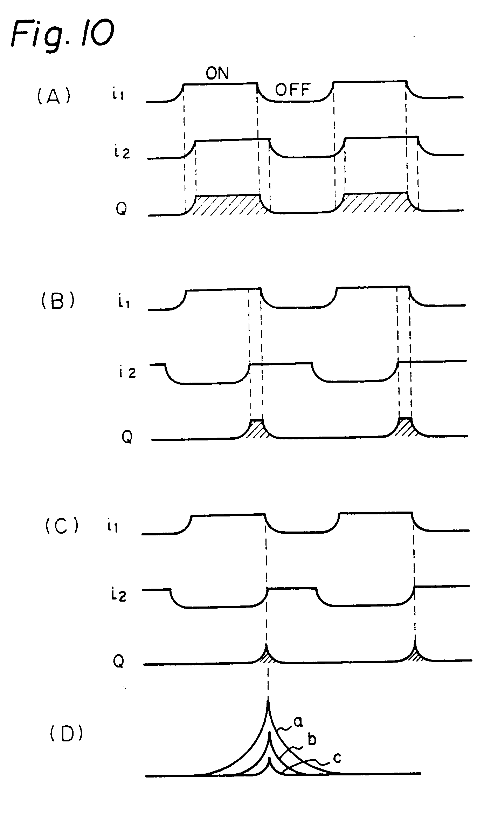

Next, fine control of the solenoid valves 701, 701′, 702, and 703 shown in Fig. 5 and Fig. 6 will be explained in reference to Fig. 10 (A) to (D).

Referring to Fig. 10, as mentioned above, the open ("on") and close ("off") timings of each solenoid valve 701, 701′, 702, and 703 are controlled by the controller 100. The "on" and "off" timings can be independently selected by the controller 100. Generally, there is a time delay between the "on" and "off" timings in different valves. As a result, the quantity of oil flow through the valves changes gradually at the leading edges and trailing edges of the waveforms shown in Fig. 10.

In the case of two valves, when both valves are turned on nearly simultaneously by drive currents $i_1$ and $i_2$ and are left on for a long time, the quantity of oil flow Q is indicated by the hatched area in Fig. 10 (A). When both valves are simultaneously on (open) for a short time, the quantity of oil flow Q is as shown in Fig. 10 (B). When the upstream valve is changed from "on" to "off" and the downstream valve is changed from "off" to "on", the quantity of oil is a shown in Fig. 10 (C).

As is obvious from the waveform shown in Fig. 10 (D), the overlapping of the "on" and "off" timing of the valves affects the quantity of oil flow.

The method of controlling the quantity of oil flow according to the present invention is particularly advantageous when the solenoid valves 701, 701′, 702, and 703 are controlled as shown in Figs. 10 (C) and (D). In the embodiment shown, the solenoid valves 701 and 701′ are provided in series in the supply side fluid passage, while the solenoid valves 702 and 703 are provided in parallel in the exhaust side fluid passage. In conventional systems using a single solenoid valve in the supply side, the solenoid valve has not been able to operated fast enough in accordance with a rapid succession of "on" and "off" instructions. As result, conventionally, the quantity of oil flow through the valves during "on" and "off" timing has been unstable (imprecise).

However, according to the present invention, "on" and "off" control of valves can be independently performed by the controller 100. Consequently, it is possible to control the solenoid valves 701, 701′, 702 and 703 to operate at exactly the right timings. A stable flow of oil is possible even with an extremely small overlap of time in "on" timing.

Consequently, since the quantity of oil flow through each valve can be finely controlled by the microcomputer, the clutch moving speed and the clutch moving time can be precisely controlled to suit various driving conditions.

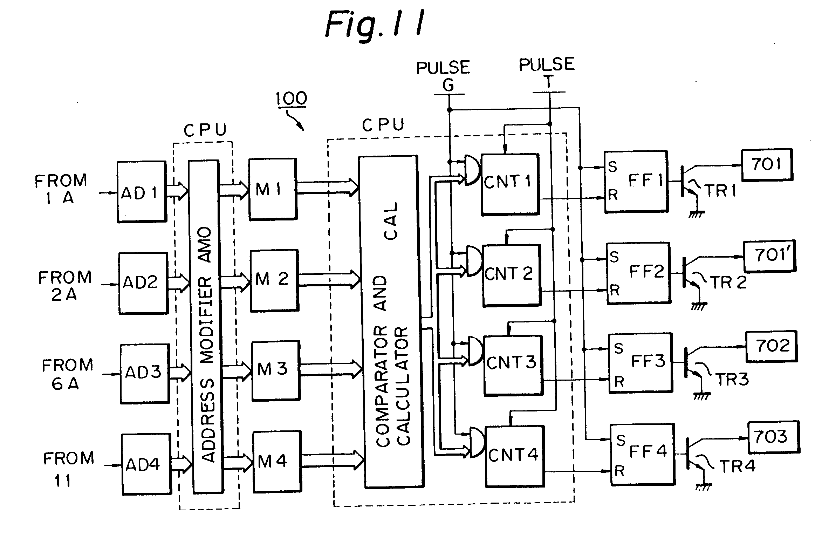

Referring to Fig. 11, the controller 100 is mainly constituted by analog-digital converters AD1 to AD4, an adress modifier AMO, memories M1 to M4, a comparator and calculator CAL, counters CNT1 to CNT4, and flip-flop circuits FF1 to FF4. The adress modifier AMO, comparator and calculator CAL, and counters CNT are incorporated in a central processing unit CPU.

An analog output signal from for example, the accelerator pedal sensor 1A is applied to the analog-digital converter AD1. An analog output detected by, for example, the clutch stroke sensor 6A is applied to the analog-digital converter AD2. The digital outputs from the analog-digital converters AD1 and AD2 are applied to the memories M1 ann M2, respectively via the address modifier AMO. The digital outputs designate addresses in the memories (tables) M1 and M2.

Data correspoding to the analog signals is read out from the tables and supplied to the comparator and calculator CAL and appropriately processed. In the case of memory M1, the resultant data is applied to the counter CNT1 for presetting the counter CNT1. The counter CNT1 sequentially counts down, from the present (preset) number using a periodically input pulse T and resets the flip-flop circuit FF1 when reaching zero.

The output of the flip-flop circuit FF1 is applied to a base of a transistor TR1. When the transistor TR1 turns on, the solenoid valve 701 is activated. If the gate value which controls output of the memory M1 is stored in another table, for example, memory M2, the clutch moving speed and clutch moving time can be controlled as shown in Figs. 7 to 9.

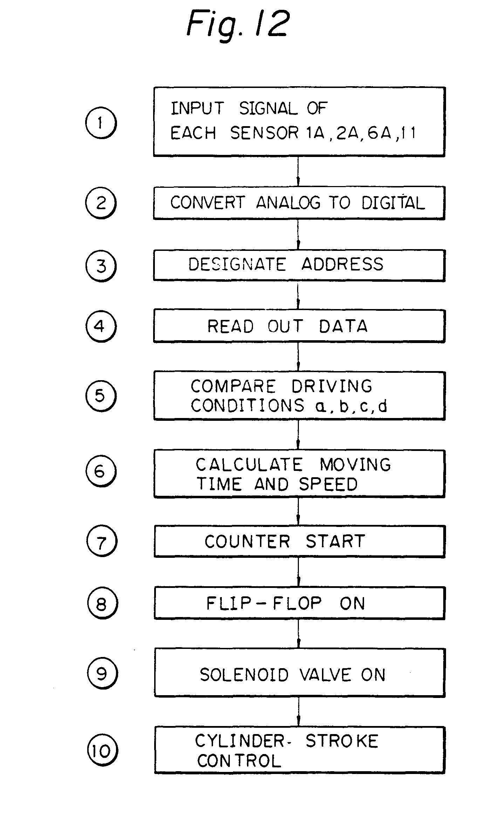

Referring to Fig. 12, the signals from each sensor, i.e., the accelerator pedal sensor 1A, the engine speed sensor 2A, the clutch stroke sensor 6A, and the vehicle speed sensor 11, are first applied to the analog-digital converters at step 1. These analog signals are converted to digital signals at step 2. The digital signals transmitted from the analog-digital converters designate addresses in the tables at step 3. The stored data corresponding to the sensor signals is read out from the tables and applied to the comparator and calculator CAL at step 4. The comparator and calculator CAL compares the read out data with prestored data of driving conditions *a*, *b*, *c*, and *d* and calculates differentials for obtaining clutch moving time and clutch moving speed based on commands transmitted from the central processing unit CPU at steps 5 and 6. The resultant data is applied to the counters, which sequentially count down from preset numbers based on periodically input pulses at step 7. The flip-flop circuits are reset when the counts become zero at step 8. The outputs of the flip-flop circuits are applied to the bases of the transistors and the transistors turn on. The solenoid valves are activated by the current flowing through the transistors at step 9. Consequently, the cylinder stroke is controlled by the "on" or "off" timing of each valve at step 10. Therefore, the clutch stroke can be suitably controlled for all driving conditions.

## Claims

1. An apparatus for an automatic clutch control system, for use in a motor vehicle, comprising:

first means (1A) mounted to an accelerator pedal (1) for sensing accelerator position;

second means (2A) counted to an engine (2) for sensing engine speed;

third means (6A) mounted to a clutch actuator (6) for sensing clutch (4) stroke;

fourth means (11) mounted to a transmission (5) for sensing vehicle speed; and

a microcomputer (100) for controlling opening or closing of solenoid valves (701,701',702,703), gear change of a transmission, and opening or closing of a throttle actuator (3), based on predetermined stored data and based on signals transmitted from the first (1A), second (2A), third (6A), and fourth (11) sensing means, for automatic control of the clutch (41, characterised in that:

said microcomputer is operable automatically to control clutch moving time and clutch moving speed in dependence upon driving conditions in a manner such that said clutch moving time is controlled to a predetermined value from clutch disengagement to clutch slip, and controlled to one of a set of predetermined values appropriate to driving conditions from clutch slip to clutch engagement, and said microcomputer (100) is further operable to control said clutch moving speed to one of a set of predetermined constant values appropriate to driving conditions from clutch slip to near clutch engagement and then to a predetermined constant value to clutch engagement.

2. An apparatus as claimed in claim 1, wherein said microcomputer (100) is further operable to control said clutch moving speed to a constant value from clutch disengagement to clutch slip.

3. An apparatus as claimed in claim 1 or 2 wherein said third means (6A) comprises a potentiometer.

4. An apparatus as claimed in any preceding claim, wherein a plurality of said solenoid valves (701,701',702,703) are provided to control a quantity of fluid flow to and from said clutch actuator (6) for operating the same.

5. An apparatus as claimed in claim 4, wherein said microcomputer (100) is operable to control each of the solenoid valves (701,701',702,703) independently.

6. An apparatus as claimed in claimed 5, wherein two of said solenoid valves (701,701') are provided in series and wherein said microcomputer (100) is operable to control the quantity of fluid flow to or from said clutch actuator (6) by opening or closing the two solenoid valves (701,701') with overlapping timings.

7. A method for automatic clutch control, for a motor vehicle, comprising the steps of:

detecting accelerator (1) position by an accelerator pedal sensor (1A), engine (2) speed by an engine speed sensor (2A), clutch (4) stroke by a clutch stroke sensor (6A), and vehicle speed by a vehicle speed sensor (11);

comparing the sensor data with predetermined stored data, and controlling the clutch accordingly; characterised by:

calculating, by a microcomputer (100), a clutch moving time and clutch moving speed based on predetermined data for various driving conditions;

controlling, by said microcomputer (100), opening or closing of solenoid valves (701,701',702, 703) based on signals generated from flip-flop circuits (FF1....FF4) via counters (CNT1...CNT4) activated by the calculation;

controlling the clutch moving time and clutch moving speed by means of a clutch actuator (6) controlled by the solenoid valves (701,701',702,703); wherein each said solenoid valve (701,701',702,703) is independently controlled by said microcomputer (100), and two of said solenoid valves (701,701') are provided in series, a quantity of fluid flow for the clutch actuator being controlled by overlapping timing of opening or closing of said solenoid valves (701,701') using said microcomputer; and wherein said clutch moving time is controlled to a predetermined value from clutch disengagement to clutch slip and controlled to one of a set of predetermined values appropriate to driving conditions from clutch slip to clutch engagement, and wherein said clutch moving speed is controlled to one of a set of predetermined constant values appropriate to driving conditions from clutch slip to near clutch engagement and then to a predetermined constant value to clutch engagement.

8. A method as claimed in claim 7, wherein two of said solenoid valves are provided in series in a supply side fluid passage and another two of said solenoid valves are provided in parallel in an exhaust side fluid passage, said quantity of fluid flow being controlled by overlapping periods of opening of said solenoid valves of both the supply and exhaust sides using said microcomputer.

9. A method as claimed in claim 8, wherein said exhaust side fluid passage has a different diameter from said supply side fluid passage.

10. A method as claimed in claim 7, 8 or 9 wherein said clutch moving speed is controlled to a constant value from clutch disengagement to clutch slip.

## Revendications

1. Dispositif pour système de commande d'embrayage automatique, destiné à servir dans un véhicule à moteur, comprenant :

un premier moyen (1A) monté sur une pédale d'accélérateur (1) pour détecter la position d'accélérateur ;

un deuxième moyen (2A) monté sur un moteur (2) pour capter la vitesse du moteur ;

un troisième moyen (6A) monté sur un actionneur d'embrayage (6) pour capter la course d'embrayage (4) ;

un quatrième moyen (11) monté sur une boite-de-vitesses (5) pour capter la vitesse du véhicule ; et

un, micro-ordinateur (100) pour commander l'ouverture ou la fermeture de soupapes à solénoïde (701, 701', 702, 703), le changement de vitesse d'une boite de vitesses, et l'ouverture ou la fermeture d'un actionneur de papillon (3), selon des données prédéterminées mémorisées et selon des signaux émis par les premier (1A), deuxième (2A), troisième (6A), et quatrième (11) moyens capteurs, pour une commande automatique de l'embrayage (4), caractérisé en ce que :

le micro-ordinateur peut être mis en fonctionnement automatiquement pour contrôler le temps de déplacement d'embrayage et la vitesse de déplacement d'embrayage en fonction des conditions de conduite d'une manière telle que le temps de déplacement d'embrayage est contrôlé jusqu'à une valeur prédéterminée d'un débrayage à un patinage d'embrayage, et contrôlé jusqu'à une valeur d'un groupe de valeurs prédéterminées appropriée aux conditions de conduite d'un patinage d'embrayage à un embrayage, et ledit micro-ordinateur (100) peut en outre être mis en fonctionnement pour contrôler la vitesse de déplacement d'embrayage jusqu'à une valeur d'un groupe de valeurs constantes prédéterminées appropriée aux conditions de conduite d'un patinage d'embrayage au voisinage d'un embrayage et ensuite jusqu'à une valeur constante prédéterminée jusqu'à l'embrayage.

2. Dispositif selon la revendication 1, dans lequel le micro-ordinateur (100) peut en outre être mis en fonctionnement pour contrôler la vitesse de déplacement d'embrayage jusqu'à une valeur constante d'un débrayage à un patinage d'embrayage.

3. Dispositif selon la revendication 1 ou 2, dans lequel le troisième moyen (6A) comprend un potentiomètre.

4. Dispositif selon l'une quelconque des revendications 1 à 3, dans lequel un ensemble desdites soupapes à solénoïde (701, 701', 702, 703) sont prévues pour contrôler un débit de fluide jusqu'à et à partir de l'actionneur d'embrayage (6) pour le faire fonctionner.

5. Dispositif selon la revendication 4, dans lequel le micro-ordinateur (100) peut être mis en fonctionnement pour commander chacune des soupapes à solénoïde (701, 701', 702, 703) indépendamment.

6. Dispositif selon la revendication 5, dans lequel deux des soupapes à solénoïde (701, 701') sont prévues en série et dans lequel le micro-ordinateur (100) peut être mis en fonctionnement pour contrôler le débit de fluide jusqu'à ou à partir de l'actionneur d'embrayage (6) par l'ouverture ou la fermeture des deux soupapes à solénoïde (701, 701') avec superposition des temps de synchronisation.

7. Procédé pour une commande d'embrayage automatique, pour un véhicule à moteur, consistant à :

détecter la position d'accélérateur (1) au moyen d'un capteur de pédale d'accélérateur (1A), la vitesse de moteur (2) au moyen d'un capteur de vitesse de moteur (2A), la course d'embrayage (4) au moyen d'un capteur de course d'embrayage (6A), et la vitesse de véhicule au moyen d'un capteur de vitesse de véhicule (11) ;

comparer les données de capteurs à des données prédéterminées mémorisées, et commander l'embrayage en conséquence ; caractérisé en ce qu'il consiste à :

calculer, au moyen d'un micro-ordinateur (100), un temps de déplacement d'embrayage et une vitesse de déplacement d'embrayage selon des données prédéterminées pour différentes conditions de conduite ; ,

commander, au moyen du micro-ordinateur (100), l'ouverture ou la fermeture de soupapes à solénoïde (701, 701', 702, 703) selon les signaux engendrés par des circuits à bascule (FF1, ..., FF4) par l'intermédiaire de compteurs (CNT1, ..., CNT4) rendus actifs par le calcul ;

contrôler le temps de déplacement d'embrayage et la vitesse de déplacement d'embrayage au moyen d'un actionneur d'embrayage (6) commandé par les soupapes à solénoïde (701, 701', 702, 703) ; dans lequel chaque soupape à solénoïde (701, 701', 702, 703) est commandée indépendamment par le micro-ordinateur (100) et deux des soupapes à solénoïde (701, 701') sont prévues en série, le débit de fluide étant contrôlé pour l actionneur d'embrayage par superposition du temps de synchronisation de l'ouverture ou de la fermeture des soupapes à solénoïde (701, 701') en mettant en oeuvre le micro-ordinateur ; dans lequel le temps de déplacement d'embrayage est contrôlé jusqu'à une valeur prédéterminée d'un débrayage à un patinage d'embrayage et contrôlé jusqu'à une valeur d'un groupe de valeurs prédéterminées appropriée aux conditions de conduite d'un patinage d'embrayage à un embrayage, et dans lequel la vitesse de déplacement d'embrayage est contrôlée jusqu'à une valeur d'un groupe de valeurs constantes prédéterminées appropriée aux conditions de conduite d'un patinage d'embrayage au voisinage d'un embrayage et ensuite jusqu'à une valeur constante prédéterminée jusqu'à l'embrayage.

8. Procédé selon la revendication 7, dans lequel deux des soupapes à solénoïde sont prévues en série dans un conduit de fluide du côté alimentation et deux autres des soupapes à solénoïde sont prévues en parallèle dans un conduit de fluide du côté évacuation, le débit de fluide étant contrôlé par superposition des périodes d'ouverture des soupapes à solénoïde des deux côtés alimentation et évacuation en mettant en oeuvre le micro-ordinateur.

9. Procédé selon la revendication 8, dans lequel le conduit de fluide du côté évacuation a un diamètre différent du conduit de fluide du côté alimentation.

10. Procédé selon la revendication 7, 8 ou 9, dans lequel la vitesse de déplacement d'embrayage est contrôlée jusqu'à une valeur constante d'un débrayage à un patinage d'embrayage.

**Patentansprüche**

1. Vorrichtung für ein automatisches Kupplungssteuersystem zur Verwendung in einem Motorfahrzeug, mit:

einer ersten Einrichtung (1A), die auf einem Gaspedal (1) montiert ist, um die Gaspedalposition zu fühlen;

einer zweiten Einrichtung (2A), die an einem Motor (2) montiert ist, um die Motordrehzahl zu fühlen;

einer dritten Einrichtung (6A), die auf einem Kupplungsbetätiger (6) montiert ist, um den Kupplungshub (4) zu fühlen;

einer vierten Einrichtung (11), die auf einem Getriebe (5) montiert ist, um die Fahrzeuggeschwindigkeit zu fühlen; und

einem Mikrocomputer (100) zur Steuerung der Öffnung oder des Schließens von Solenoidventilen (701, 701', 702, 703), des Gangwechsels des Getriebes und des Öffnens und Schließens eines Drosselbetätigers (3), basierend auf vorbestimmten gespeicherten Daten und basierend auf Signalen, die von der ersten (1A), zweiten (2A), dritten (6A) und vierten (11) Fühleinrichtung gefühlt werden, um automatisch die Kupplung (4) zu steuern, dadurch gekennzeichnet, daß

der genannte Mikrocomputer automatisch betreibbar ist, um die Kupplungsbewegungszeit und die Kupplungsbewegungsgeschwindigkeit in Abhängigkeit von den Fahrbedingungen in solch einer Weise zu steuern, daß die

genannte Kupplungsbewegungszeit durch einen vorbestimmten Wert von der Kupplungsfreigabe zum Kupplungsschlüpf gesteuert wird, und auf einen von vorbestimmten, für die Fahrbedingungen geeigneten Satz von Werten vom Kupplungsschlupf zum Kupplungseingriff gesteuert wird, und bei der der genannte Mikrocomputer (100) ferner betreibbar ist, um die genannte Kupplungsbewegungsgeschwindigkeit auf einen von einem Satz von vorbestimmten konstanten, für die Fahrbedingungen geeigneten Wert vom Kupplungsschlupf bis nahe zum Kupplungseingriff und dann auf einen vorbestimmten konstanten Wert zum Kupplungseingriff zu steuern.

2. Vorrichtung nach Anspruch 1, bei der der genannte Mikrocomputer (100) ferner betreibbar ist, um die genannte Kupplungsbewegungsgeschwindigkeit auf einen konstanten Wert vom Lösen der Kupplung zum Kupplungsschlupf zu steuern.

3. Vorrichtung nach Anspruch 1 oder 2, bei der die genannte dritte Einrichtung (6A) ein Potentiometer umfaßt.

4. Vorrichtung nach einem der vorhergehenden Ansprüche, bei der eine Vielzahl von den genannten Solenoidventilen (701, 701', 702, 703) vorgesehen sind, um eine Menge eines Strömungsmittelflusses zu und von dem genannten Kupplungsbetätiger (6) zu dessen Betrieb zu steuern.

5. Vorrichtung nach Anspruch 4, bei der der genannte Mikrocomputer (100) betreibbar ist, um jedes der Solenoidventile (701, 701', 702, 703) unabhängig zu steuern.

6. Vorrichtung nach Anspruch 5, bei der zwei von den genannten Solenoidventilen (701, 701') in Reihe vorgesehen sind und bei der der genannte Mikrocomputer (100) betreibbar ist, um die Menge des Strömungsmittelstromes zu oder von dem genannten Kupplungsbetätiger (6) durch Öffnen oder Schließen der beiden Solenoidventile (701, 701') mit überlappenden Zeitsteuerungen zu steuern.

7. Verfahren zur automatischen Kupplungssteuerung, für ein Motorfahrzeug mit den folgenden Schritten:

Fühlen der Gaspedalposition (1) durch einen Gaspedalfühler (1A), der Motordrehzahl (2) durch einen Motordrehzahlfühler (2A), des Kupplungshubes (4) durch einen Kupplungshubfühler (6A) und der Fahrzeuggeschwindigkeit durch einen Fahrzeuggeschwindigkeitsfühler (11);

Vergleichen der Fühlerdaten mit vorbestimmten gespeicherten Daten und entsprechende Steuerung der Kupplung, gekennzeichnet durch:

Berechnen, durch einen Mikrocomputer (100), einer Kupplungsbewegungszeit und Kupplungsbewegungsgeschwindigkeit, basierend auf vorbestimmten Daten für verschiedene Fahrbedingungen;

Steuern, durch den genannten Mikrocomputer (100), des Öffnens und Schließens von Solenoidventilen (701, 701", 702, 703), basierend auf Signalen, die von Flip-flop-Schaltungen (FF1 ... FF4) erzeugt werden, über Zähler (CNT1 ... CNT4), die durch die Rechnung aktiviert werden;

Steuern der Kupplungsbewegungszeit und der Kupplungsbewegungsgeschwindigkeit mittels eines Kupplungsbetätigers (6), der durch die Solenoidventile (701, 701', 702, 703) gesteuert wird; wobei jedes genannte Solenoidventil (701, 701', 702, 703) durch den genannten Mikrocomputer (100) unabhängig gesteuert wird und zwei von den genannten Solenoidventilen (701, 701') in Reihe vorgesehen sind, eine Menge des Strömungsmittelflusses für den Kupplungsbetätiger durch überlappende Zeitsteuerung des Öffnens oder Schließens der genannten Solenoidventile (701, 701') gesteuert wird, unter Verwendung des genannten Mikrocomputers; und bei dem die genannte Kupplungsbewegungszeit durch einen vorbestimmten Wert von der Kupplungsfreigabe zum Kupplungsschlupf gesteuert wird und zu einem eines Satzes von vorbestimmten, für die Fahrbedingungen geeigneten Werten vom Kupplungsschlupf zum Kupplungseingriff gesteuert wird, und bei dem die genannte Kupplungsbewegungsgeschwindigkeit auf einen von einem Satz von vorbestimmten, konstanten, für die Fahrbedingungen geeigneten Werten vom Kupplungsschlupf bis nahe zum Kupplungseingriff und dann um einen vorbestimmten konstanten Wert zum Kupplungseingriff gesteuert wird.

8. Verfahren nach Anspruch 7, bei dem zwei der genannten Solenoidventile in Reihe in einem versorgungsseitigen Strömungsmittelkanal vorgesehen sind, und zwei andere der genannten Solenoidventile parallel in einem ausgangsseitigen Strömungsmittelkanal vorgesehen sind, die genannte Menge von Strömungsmittelfluß durch zwei überlappende Zeitperioden des öffnens der genannten Solenoidventile von sowohl der Versorgungsseite als auch der Auslaßseite gesteuert wird, unter Verwendung des genannten Mikrocomputers.

9. Verfahren nach Anspruch 8, bei dem der genannte ausgangsseitige Strömungsmittelkanal einen anderen Durchmesser als der versorgungsseitige Strömungsmittelkanal hat.

10. Verfahren nach Anspruch 7, 8 oder 9, bei dem die genannte Kupplungsbewegungsgeschwindigkeit von der Kupplungsfreigabe zum Kupplungsschlupf auf einen konstanten Wert gesteuert wird.

## Fig. 1

## Fig. 2

# Fig. 3

# Fig. 4

# Fig. 5

Fig. 6

Fig. 7

Fig. 8

Fig. 9

# Fig. 10

(A) $i_1$  ON  OFF
$i_2$
Q

(B) $i_1$
$i_2$
Q

(C) $i_1$
$i_2$
Q

(D)  a
b
c

# Fig. 11

EP 0 129 417 B2

# Fig. 12

(1) INPUT SIGNAL OF EACH SENSOR 1A, 2A, 6A, 11

(2) CONVERT ANALOG TO DIGITAL

(3) DESIGNATE ADDRESS

(4) READ OUT DATA

(5) COMPARE DRIVING CONDITIONS a, b, c, d

(6) CALCULATE MOVING TIME AND SPEED

(7) COUNTER START

(8) FLIP-FLOP ON

(9) SOLENOID VALVE ON

(10) CYLINDER-STROKE CONTROL